# EUROPEAN PATENT SPECIFICATION

(11) **EP 4 190 974 B1**
(45) Date of publication and mention of the grant of the patent: **01.01.2025**
(21) Application number: 22211124.7
(22) Date of filing: 02.12.2022
(51) Int. Cl.: E01F 9/60

(54) **A BOLLARD AND A CAMERA MOUNT**
POLLER UND KAMERAHALTERUNG
BOLLARD ET SUPPORT DE CAMÉRA

(30) Priority: 03.12.2021 GB 202117475
(43) Date of publication of application: 07.06.2023
(73) Proprietor: Parkingeye Limited, Chorley, Lancashire PR7 7NA (GB)
(72) Inventor: CUNLIFFE, Adrian, Chorley, Lancashire PR7 7NA (GB)
(74) Representative: Scintilla Intellectual Property Ltd

(56) References cited:
- WO-A1-2018/119050
- CN-U- 209 294 713
- US-A1- 2019 130 203

## Description

The present disclosure relates to bollards and mounting systems. In particular the present disclosure relates to bollards and mounting systems for mounting an imaging sensor in a bollard.

### BACKGROUND

Systems including cameras can be used for monitoring cars in car parks. Such applications can include barrier control for automatic entry systems.

Electric vehicle (EV) chargers are becoming more and more common in car parks as an increasing number of people switch from traditional vehicles to electric vehicles. It is common nowadays to have one or more EV chargers in a car park so that car park users can charge their EV while their car is in the car park.

To this end, car parks, generally have parking areas specially reserved to electric vehicles right next to the EV charger.

However, there are various issues related to the use of these reserved EV areas.

Some users park their non-electric vehicle in the space, preventing EV users to charge their vehicles.

Some users leave their EV or non-electric vehicles in these charging areas for much longer after the battery of their EV is fully charged, preventing others from using the charger.

Additionally, EV charger infrastructure is very expensive to install, therefore it is important that the chargers are used for legitimate reasons. By not managing the bays, it increase range anxiety for other EV drivers and creates a perception that there is a lack of charging infrastructure.

Hence there is a need to monitor certain parking areas and recognize vehicle plates so that the vehicle can be identified and fines or other corrective measures can be applied wherever needed, according to the rules of the car park. This also applies to disabled bays, taxi bays, ambulance bays and any other location where the right to park is restricted in some way.

More generally, wherever there is a parking area, there is a need to monitor use of the area and to identify the vehicles which do not respect the rules.

In the past, parking attendants would be monitoring the parking area(s), however nowadays it is common to have cameras for monitoring use of parking areas. In particular, cameras have been developed which can automatically capture the plate number of a vehicle so that it is easier to retrieve information associated with the vehicle. It will be appreciated that cameras may be referred to as imaging or image sensors, or any other appropriate term, in accordance with the understanding of the skilled person.

Some car parks use large cameras fitted on high poles or other structure to monitor the overall use of the space, however these cameras tend to be quite expensive. The large cameras are used to manage the overall car park. The cameras are used to make sure vehicles do not overstay in the car park and can be linked to payment machines, so when a vehicle leaves, it is known that the driver has paid enough for the duration of their stay. These cameras are unsuitable for monitoring single car parking bays as they do not use suitable lenses, meaning focal lengths would be incorrect for the required optical performance. In some cases, the cameras are over specified in terms of CPU performance, infra-red lighting and weather proofing. Additionally, they are far too expensive for monitoring single bays or very small groups of bays, for example up to five bays.

Some car parks with EV chargers have cameras fitted inside the charger themselves, however they can be ineffective at identifying number plates when cars are not parked in exactly the correct position for imaging. Similarly camera systems for barrier control can also be subject to these shortcomings.

US 2019/0130203 describes a parking enforcement device. The device is in two parts and comprises a substantially cylindrical bollard with a camera mounted on its exterior and a cover in which the bollard is enclosed.

### SUMMARY

It is an object of the present disclosure to provide a system for identifying cars, for example in a car park, effectively and/or at a reduced cost over prior art systems.

According to the disclosure there is provided a bollard as set out in the attached claims.

### BRIEF DESCRIPTION OF THE DRAWINGS

The disclosure is described in further detail below by way of example and with reference to the accompanying drawings in which:
Figure 1 is a schematic diagram of a prior art bollard having a camera for monitoring cars for opening or closing barriers;
Figure 2 is a schematic diagram of a camera mount according to a first embodiment of the present disclosure;
Figure 3 is a schematic diagram of a camera mount according to a specific embodiment of the camera mount as presented in Figure 2;
Figure 4 is a schematic diagram of a bollard according to a second embodiment of the present disclosure;
Figure 5 is a schematic diagram of a bollard corresponding to a specific embodiment of the bollard of Figure 4;
Figure 6A is a schematic diagram of a bollard according to a third embodiment of the present disclosure, and Figure 6B is a schematic of an alternative embodiment of the bollard of Figure 6A;
Figure 7 is a schematic diagram of an apparatus according to a fourth embodiment of the present disclosure;
Figure 8 is a schematic diagram of an apparatus according to a specific embodiment of the apparatus of Figure 7;
Figure 9 is a schematic diagram of an apparatus according to another specific embodiment of the apparatus of Figure 7;
Figure 10 is a three dimensional perspective view of a camera mount according to a fifth embodiment of the present disclosure;
Figure 11 is a two-dimensional interior view of a bollard according to a sixth embodiment of the present disclosure;
Figure 12 is a schematic diagram showing an embodiment of the camera mount when attached to an embodiment of the bollard;
Figure 13A is a schematic diagram showing a top view of an apparatus comprising an embodiment of the bollard and an embodiment of the camera mount, and Figure 13B is a schematic of an alternative embodiment of the apparatus of Figure 13A;
Figure 14 is a three dimensional view showing an apparatus according to a seventh embodiment of the present disclosure;
Figure 15A is three dimensional views of a specific embodiment of the apparatus and Figure 15B is a three dimensional view of the specific embodiment of the apparatus as shown in Figure 15A at a different perspective;
Figure 16A is schematics of a specific implementation of a camera mount, Figure 16B is a schematic corresponding to Figure 16A from a different perspective, and Figure 16C is a schematic corresponding to Figure 16A from a further different perspective, and in accordance with an eighth embodiment of the present disclosure;
Figure 17 is a schematic diagram of an apparatus corresponding to a specific embodiment of the apparatus shown in Figure 7;
Figure 18 is a schematic of an apparatus where the bollard with camera mount are separate from the EV charger;
Figure 19A is a schematic of a front view of an ANPR camera that may be used with any of the embodiments presented herein, and Figure 19B is a schematic of a side view of the ANPR camera of Figure 19A;
Figure 20 is a flow chart of a method of monitoring the use of an electric vehicle charger using any of the apparatuses disclosed herein, and in accordance with a ninth embodiment of the present disclosure;
Figure 21A is a schematic of a bollard for holding two cameras within its interior in accordance with a tenth embodiment of the present disclosure, and Figure 21B is a schematic of the bollard of Figure 21A showing the cameras mounted within;
Figure 22 is a schematic of an apparatus having two EV chargers and two cameras in a back-to-back arrangement;
Figure 23 is an alternative schematic of the apparatus of Figure 17 with possible dimensions shown; and
Figure 24 is an alternative schematic of the apparatus of Figure 18 with possible dimensions shown.

### DETAILED DESCRIPTION

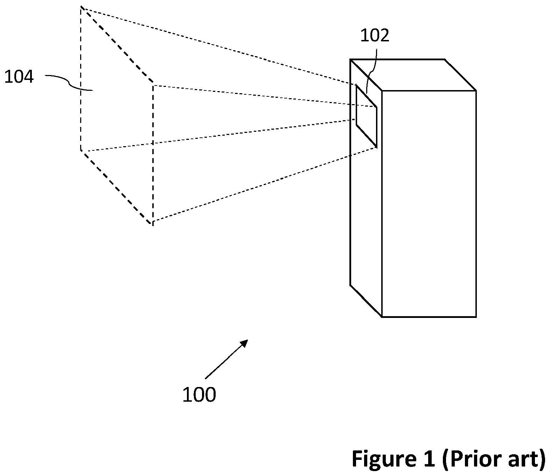

Figure 1 is a schematic diagram of a prior art bollard 100 having a camera 102 for monitoring cars for opening or closing barriers. The camera 102 is at a fixed height and can only detect number plates within a limited field of view 104. In some cases the camera may be tiltable although this still provides a limited field of view for number plate detection.

Such systems are often large and bulky and are unsuitable for attachment of EV chargers and payment terminals. These systems use large ANPR cameras inside wide bollards and would be over specified for single bay monitoring. Furthermore the bollard size is unsuitable for monitoring individual cars in parking bays, as the large bollards would occupy space that would preferably be used for car parking.

For EV charge points with integrated ANPR cameras, the cameras are in a fixed position within the charger. The charger is often at person height to make it accessible and not at number plate height, so the fixed camera is not in an optimum position to maximise number plate reads. To reliably enforce violations, the camera ideally has a successful number plate read rate of over 95%.

In summary, in prior art systems, the cameras are fitted at a fixed positions which is disadvantageous because different car parks have different configuration. Some may have a slope or they may have sections with a raised ground floor.

This means that for example, an EV charger with a fixed camera may be at the correct height to detect the number place in a certain car park or section of a car park, but it may be too high or too low in other car parks or other areas of the car park.

Moreover, different vehicles have different shapes and their plates may be located at different heights. For example, the plate of a truck is typically higher than that of a car. An EV charger, pole or bollard with a camera at a fixed height may be suitable for detecting plate numbers in a section of a car park dedicated to cars but the same charger, pole or bollard would be too low for detecting plate numbers in a section of the car park dedicated to trucks.

Similarly, obstacles may be interposed between a bollard or EV charger fitted with a monitoring camera and prevent the camera to detect number plates in a certain portion of its field of view. The whole EV charger or bollard would need to be redeployed in order to allow number plate detection.

Known EV chargers are positioned at an accessible position for people, as their main purpose is to serve electric charging; they are not at the ideal height to capture number plates, which is required for optimum read success.

Furthermore, most prior art systems use very large and expensive cameras, which is not suitable when a large number of monitoring cameras must be deployed.

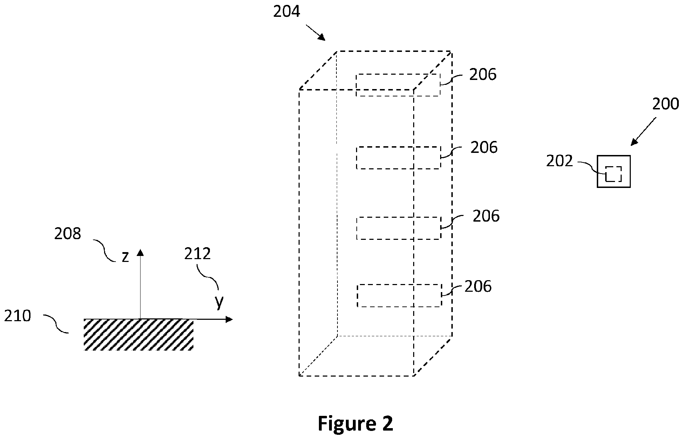

Figure 2 is a schematic diagram of a camera mount 200 according to a first embodiment of the present disclosure. The camera mount 200 is for mounting a camera 202 within a bollard 204 at one of a plurality of positions 206.

This ensures that the camera 202 can be mounted in the best position for capturing specific objects or events of interest.

The camera mount 200 and the bollard 204 may be deployed in a car park for monitoring, surveillance or enforcement purposes. The camera 202 may be configured to perform automatic plate number recognition (APNR) and the positions 206 may be distributed along a vertical direction 208 (z) perpendicular or substantially perpendicular with respect to the ground 210 such that the camera 202 can be adjusted at the best height for detecting plates.

Different car parks can have different terrains, slopes, areas of raised grounds, pavements with different heights and so forth. Moreover, different types of vehicles, such as car and trucks, tend to have plates at different heights. The camera mount 200 allows to adjust the height of the camera 202 on site and without requiring to uninstall and re-install a bollard, or to install bollard of different dimensions.

This facilitates the monitoring and surveillance of parking areas having different configurations and vehicles having plates at different heights.

The mounting system 200 allows for the same bollard 204 to be used in car parks with or without a slope, with or without a raised ground section, with trucks, cars, and vehicles having number plates at various different heights.

The positions 206 may be equidistant or approximately equidistant, as shown in Figure 2, or they may be non-equidistant from each other.

It will be appreciated that in a further embodiment the positions 206 may be spread along a horizontal direction y (212) which is parallel or substantially parallel to the ground instead of being spread along a vertical direction. This may be beneficial for example if an obstacle (e.g. a light pole) is interposed between a bollard and an area of interest after installation of the bollard.

In some embodiments, the positions 206 may be distributed along both directions, i.e. they may be spread over the plane (y, z).

It will be appreciated that the dimensions and proportions shown in this and in following Figures are not representatives of actual dimensions and proportions and that some features may be zoomed-in, hidden, stylized, and so forth to aid clarity.

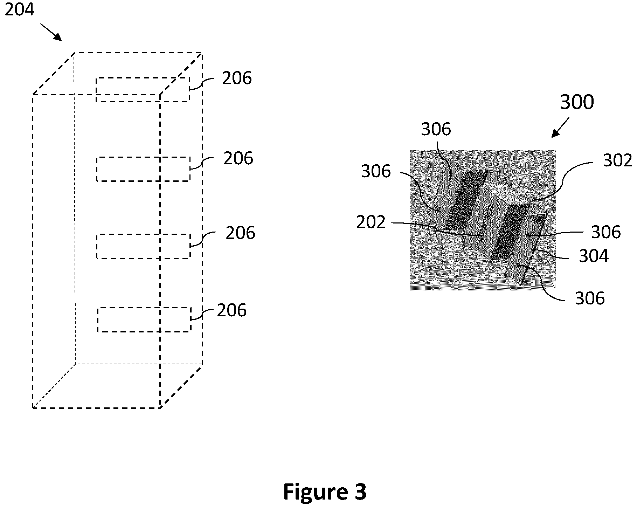

Figure 3 is a schematic diagram of a camera mount 300 according to a specific embodiment of the camera mount 200 as presented in Figure 2. Common reference numerals and variables between Figures denote common features.

The camera mount 300 comprises a holder 302 for holding the camera 202 and an attachment component 304. The attachment component 304 is coupled to the holder 302 and arranged to permit attachment of the camera mount 200 to the bollard 204.

For example, the attachment component 304 may comprise one or more apertures 306 configured to receive a screw or other type of fixing member to attach the camera mount 200 to the bollard 204 at one of the positions 206.

In the present embodiment, the camera 202 may be considered as sitting in a "top hat" shape formed by the holder 302 and the attachment component 304 when in use. In a specific embodiment the camera mount 300 may be used to mount the camera up or down in fixed intervals.

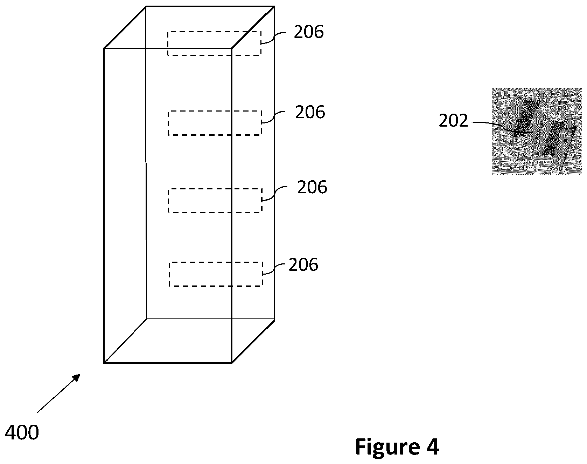

Figure 4 is a schematic diagram of a bollard 400 according to a second embodiment of the present disclosure. Common reference numerals and variables between Figures denote common features.

The bollard 400 is arranged to hold the camera 202 within its interior at one of a plurality of positions 206.

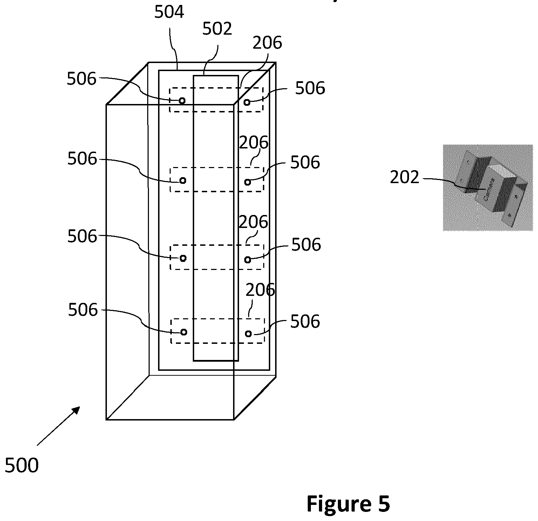

Figure 5 is a schematic diagram of a bollard 500 corresponding to a specific embodiment of the bollard 400. Common reference numerals and variables between Figures denote common features.

The bollard 500 comprises a window 502 arranged to permit light to enter the interior of the bollard 500. The window may be configured to transmit light having an infrared wavelength.

The bollard 500 further comprises a mounting portion 504 within the interior of the bollard and arranged to permit mounting of the camera 202 at one of the plurality of positions 206.

The mounting portion 504 comprises one or more apertures 506 configured to receive a fixing member to attach the camera mount 200 to the bollard 500 at the different positions 206. The fixing member may be for example a screw.

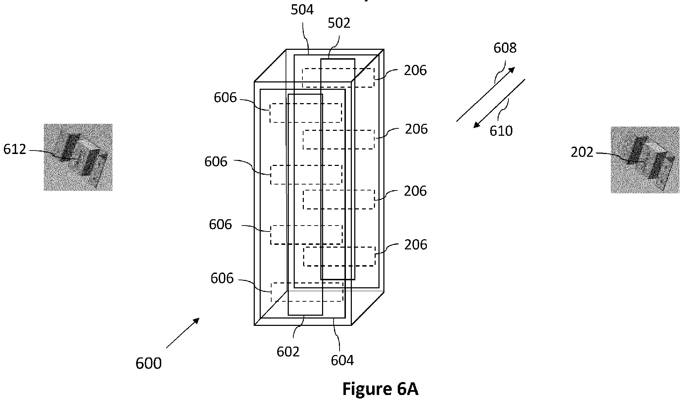

Figure 6A is a schematic diagram of a bollard 600 according to a third embodiment of the present disclosure. Common reference numerals and variables between Figures denote common features.

The bollard 600 has a window 602 arranged to permit light (for example having an infrared wavelength) to enter the interior of the bollard 600.

The bollard 600 has a mounting portion 604 within the interior of the bollard. The mounting portion 604 is arranged to permit mounting of a camera 612 at one of a plurality of second positions 606.

The bollard 600 may be configured such that the first and second mounting portions 504, 604 are arranged to permit mounting of the first camera 202 and the second camera 612 in a back-to-back orientation, that is with the camera 202 facing in a first direction 608 and the camera 612 facing in a second direction 610 which is opposite to the first direction 608. The bollard 600 may for example have a parallelepiped shape. The first mounting portions may then be provided on a first face of the parallelepiped and the second mounting portions may be provided on a second face of the parallelepiped which is opposite to the first face, as shown in Figure 6A.

This allows to monitor different areas of a car park whilst having a very compact configuration, hence minimizing the dimension of the bollard.

The back to back configuration provides an effective means of using a single bollard to monitoring two locations, such as two parking spaces. This can function as an effective space saving means within a cark park where it is desirable to maximise the area permitted for car parking, whilst still providing sufficient space for bollards, for parking regulation or EV charging monitoring functions.

It will be appreciated that in further embodiments cameras may not have their rear faces parallel with respect to each other, and their rear faces may be at angle, yet still referred to as "back-to-back". For example, 3 cameras back-to-back with respect to each other may have their rear faces at and angle of 60° with respect to adjacent cameras.

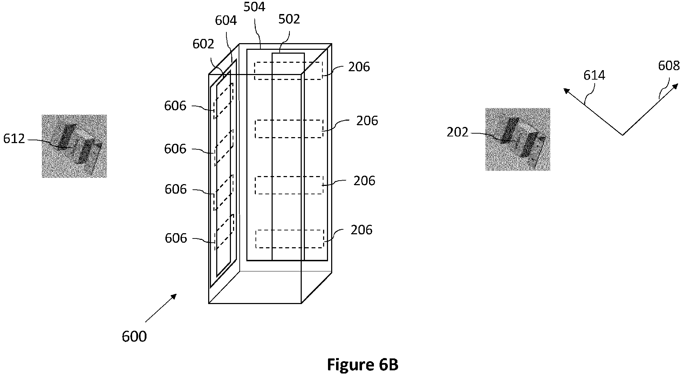

Figure 6B is a schematic diagram showing an alternative implementation in which the bollard 600 is configured such that the first and second mounting portions are arranged to permit mounting of the first camera 202 and the second camera 612 in a perpendicular configuration, that is with the camera 202 facing in a first direction 608 and the camera 612 facing in a second direction 614 which is perpendicular to the first direction. Common reference numerals and variables between Figures denote common features.

For example, with reference again to a bollard having a parallelepiped shape, the first mounting portion may be provided on a first face of the parallelepiped and the second mounting portions may be provided on a second face of the parallelepiped which is adjacent to the first face, as shown in Figure 6B.

It will be appreciated that in bollards having different shapes, the cameras 202 and 612 may be mounted within the bollard with other orientations. It will also be appreciated that more than two cameras may be mounted within the same bollard. For example, a bollard with a parallelepiped shape may have a camera mounted on each of the vertical faces of the parallelepiped.

The windows 502 and 602 may comprise a material configured to transmit light having an infrared wavelength, such that images can be captured by the camera 202 and 612 in dark settings.

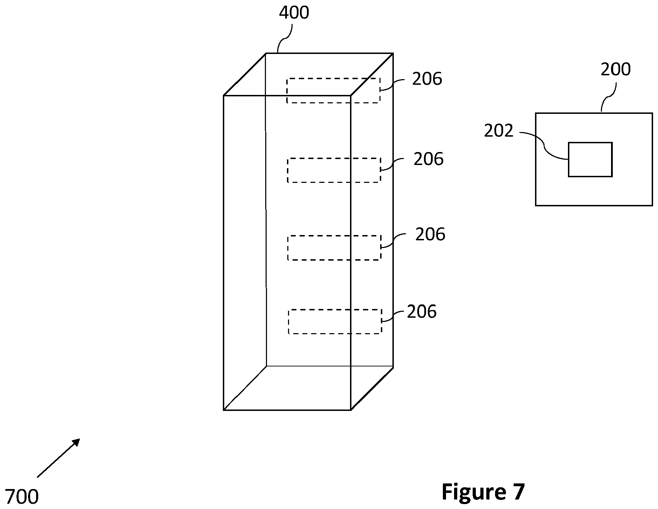

Figure 7 is a schematic diagram of an apparatus 700 according to a fourth embodiment of the present disclosure. Common reference numerals and variables between Figures denote common features.

The apparatus 700 comprises the camera mount 200 and the bollard 400.

The camera mount 200 is arranged to mount the camera 202 within the bollard 400 at one of the plurality of positions 206 and the bollard 400 is arranged to hold the camera 202 within its interior at one of the plurality of positions 206.

The camera 202 has a camera aperture for receiving incoming light and the apparatus may be configured such that the camera 202 can be mounted within the bollard 400 in an orientation which allows the camera 202 to receive light entering the interior of the bollard 400.

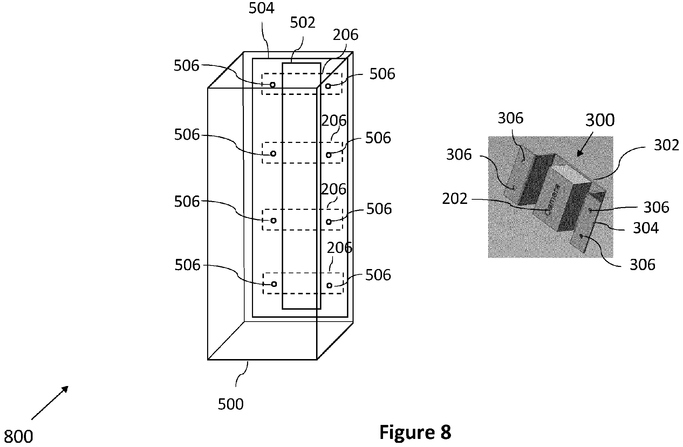

Figure 8 is a schematic diagram of an apparatus 800 according to a specific embodiment of the apparatus 700. Common reference numerals and variables between Figures denote common features.

The apparatus 700 comprises the bollard 500 and the camera mount 300.

The attachment component 304 of the camera mount 300 is couplable to the mounting portion 504 of the bollard 500 at one of the plurality of positions 206, thereby permitting mounting of the camera 202 at one of the plurality of positions 206.

In particular, the attachment component 304 is couplable to the mounting portion 504 by aligning at least one of the apertures 306 of the attachment component 304 with at least one of the apertures 506 of the mounting portion 504.

The window 502 extends over a predetermined window area and the camera mount 300 is configured to permit mounting of the camera 202 such that the camera aperture extends over at least a portion of said window area. Hence, the camera 202 can be mounted in an orientation which allows light entering the bollard via the window 502 to be received by the camera 202 via said camera aperture.

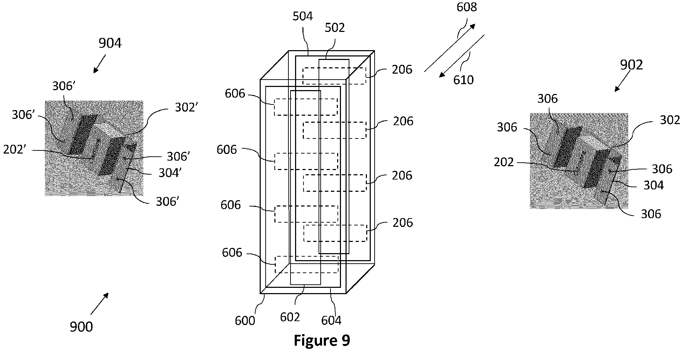

In some embodiments, the apparatuses of the present disclosure comprise two camera mounts and a bollard having two mounting portions, as illustrated in Figure 9.

Figure 9 is a schematic diagram of an apparatus 900 according to a specific embodiments of the apparatus 700. Common reference numerals and variables between Figures denote common features.

The apparatus 900 comprises a first camera mount 902 for mounting a first camera 202, a second camera mount 202' for mounting a second camera 612 and the bollard 600. The camera mounts 902 and 904 may be any of the camera mounts of the present disclosure. For example, the camera mounts 902 and 904 may be camera the camera mount 300.

The camera mounts 902 comprises a first holder 302 and a first attachment component 304 as previously described. The camera mount 904 comprises a second holder 302' analogous to the holder 302 and a second attachment component 304' analogous to the component 304.

The attachment component 304' is couplable to the second mounting portion 604 of the bollard 600 at any one of the plurality of positions 606, thereby permitting mounting of the second camera 202' at any one of the plurality of positions 606.

The first and second mounting portion 504 and 604 may be arranged to permit mounting of the first camera 202 and second cameras 612 in a back-to-back orientation as previously described with reference to Figure 6A.

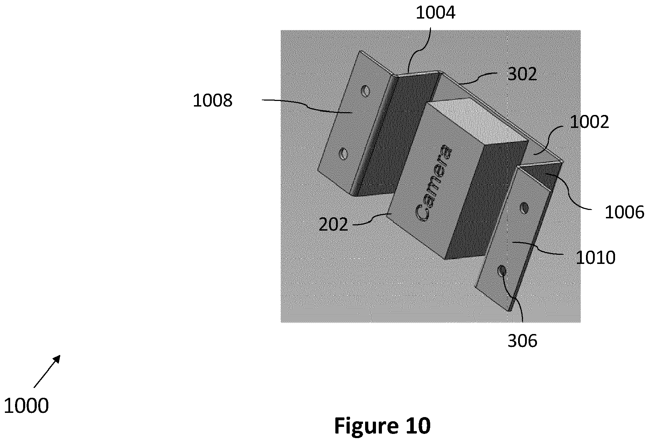

A specific implementation of the camera mounts of the present disclosures will now be described with reference to Figure 10.

Figure 10 is a three dimensional perspective view of a camera mount 1000 according to a fifth embodiment of the present disclosure. Common reference numerals and variables between Figures denote common features.

In this specific implementation, the holder 302 comprises a back wall 1002, a first side wall 1004 and a second side wall 1006. The back wall 1002 is interposed between the first and the second side wall. The attachment component 304 comprises a first flange portion 1008 protruding from the first side wall 1004 and a second flange portion 1010 protruding from the second side wall 1006.

The back wall and the two side walls are configured such that the camera 202 can be received in the volume enclosed within the first and the second side wall.

Apertures 306 are provided on each flange portion and are configured to receive a fixing member (not shown), such as a screw.

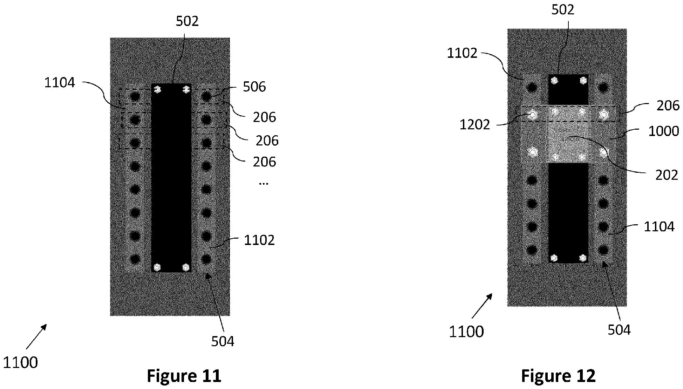

Figure 11 is a two-dimensional interior view of a bollard 1100 according to a sixth embodiment of the present disclosure. Common reference numerals and variables between Figures denote common features.

In this specific embodiment, the mounting portion 504 comprises a first strip 1102 and a second strip 1104. The first strip and the second stirp are provided on opposite sides of the window 502. Apertures 506 are provided on each strips at a plurality of locations 206. Each aperture is configured to receive a fixing member. (not shown), such as a screw, for mounting the camera mount to the bollard at any one of the plurality of locations 206.

In a further embodiment, the mounting portion 504 may comprise studs that can pass through the apertures 306 of the camera mount 1000 to permit attachment to the bollard 1100.

Figure 12 is a schematic diagram showing the camera mount 1000 when attached to the bollard 1100. The camera mount 1000 is attached to the mounting portion 504 of the bollard 1110 by fixing members 1202 which fits into the apertures 306 of the camera mount and into the apertures 506 of the mounting portion 504. When the camera mount 1000 is attached to the mounting portion 504, the first flange portion 1008 and the second flange portion 1010 lie flush on the first and second strip 1102 and 1104 respectively. The camera 202 is held within the camera holder with the camera apertures facing the window 502, such that light entering the bollard via the window 502 can be captured by the camera 202.

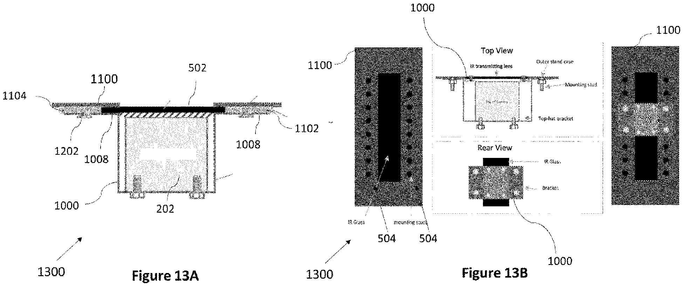

Figure 13A is a schematic diagram showing a top view of an apparatus 1300 comprising the bollard 1100 and the camera mount 1000 wherein the camera mount is attached to the interior of the bollard 1100 as previously described. Common reference numerals and variables between Figures denote common features.

The camera 202 may be held within the camera holder 302 by screws passing through holes in the back wall of the camera mount, as shown in Figure 13.

Figure 13B is a schematic diagram of an alternative embodiment of the apparatus 1300 where the camera 202 may be held within the camera holder 302 by studs 1302 provide as part of the mounting portion 504.

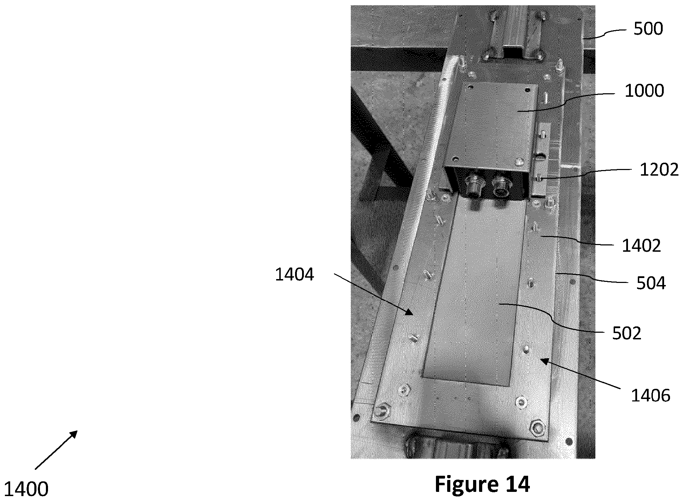

Figure 14 is a three dimensional view showing an apparatus 1400 according to a seventh embodiment of the present disclosure. Common reference numerals and variables between Figures denote common features.

The apparatus 1400 comprises the camera mount 1000 and the bollard 500. In this specific embodiment the mounting portion 504 comprises a frame 1402 which encloses the window 502 and a plurality of apertures is provided on a first side 1404 and a second side 1406 of the frame 1402.

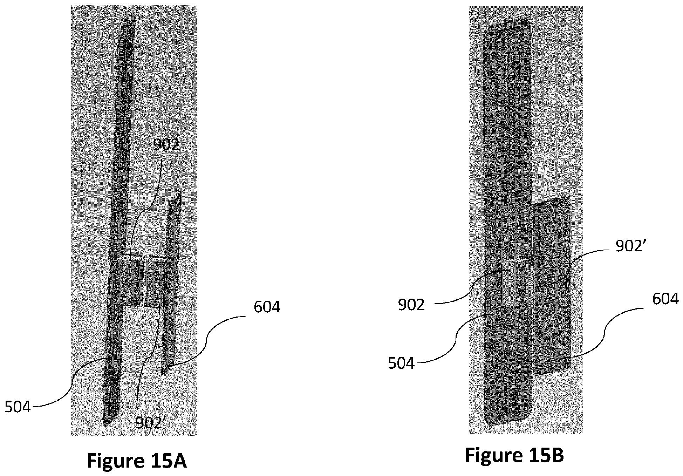

Figure 15A and 15B are three dimensional views of a specific embodiment of the apparatus 900 showing a portion of a specific embodiment of the bollard 400. Common reference numerals and variables between Figures denote common features.

In the present embodiment, the bollard 400 is configured to permit mounting of two camera 902, 902' in a back-to-back orientation, as described with reference to previous embodiments.

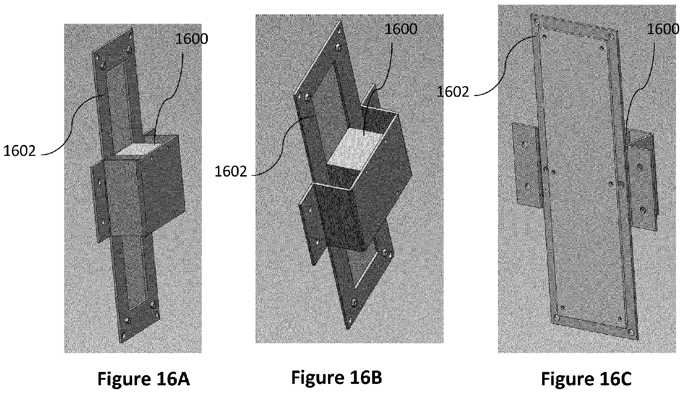

Figure 16A, 16B and 16C are schematics of a specific implementation of a camera mount 1600, which may correspond to one of the camera mounts as discussed herein, in contact with a window 1602, which may correspond to one of the windows discussed herein, according to an eighth embodiment of the present disclosure.

A bollard refers to a sturdy post that may be used to control traffic flow, or delineate sections within an area such as a car park. Bollards are therefore common features within a car park and may be used to separate different spaces.

It will be appreciated that the bollards of the present disclosure are not limited to any particular shape or dimension. It will also be appreciated that the bollards of the present disclosure are also not limited to any specific material. In some embodiment, the bollard of the present disclosure may comprise a mounting portion which made of metal.

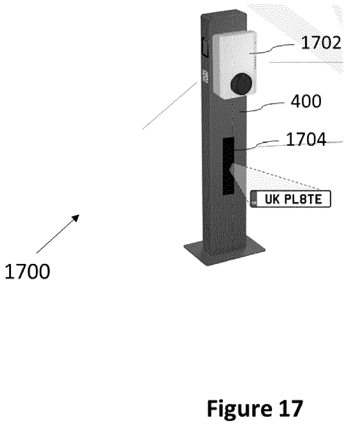

In some embodiments, the bollards of the present disclosure may comprise an EV charger 1702 and may be installed next to an EV parking area where vehicles can be parked during the charging, as shown in Figure 17.

Figure 17 is a schematic diagram of an apparatus 1700 according to a specific embodiment of the apparatus 700. In the present embodiment, the bollard 400 comprises a window 1704 which may correspond to a window as previously described.

The apparatus 1700 comprises the bollard 400 and the camera mount 200 (not visible). The apparatus 1700 further comprises an EV charger 1702.

The camera 202 can be used for monitoring use of the EV parking area, such that when a car is parked in front of the bollard 400, the camera within the bollard (and via the window 1704) may be used to detect the car or "read" a feature of the car such as its licence plate.

In particular, the camera 202 may be configured to perform automatic number plate recognition (ANPR) and the bollard 400 may be provided with a processor or coupled to a processor configured to retrieve information related to the number plate. The EV charger may be a AC or DC charger. In the present embodiment the EV charger is an AC charger.

In some embodiments the bollard may comprise a small post deployed nearby said an EV charger rather than the EV charger being part of the bollard.

As the camera 202 is not part of the EV charger 1702, the camera 202 may be positioned at the appropriate for smaller chargers and also for ensuring that a licence plate can effectively be read. Any suitable EV charger may be mounted in the bollard 400 and in the present example an ABB charger is shown.

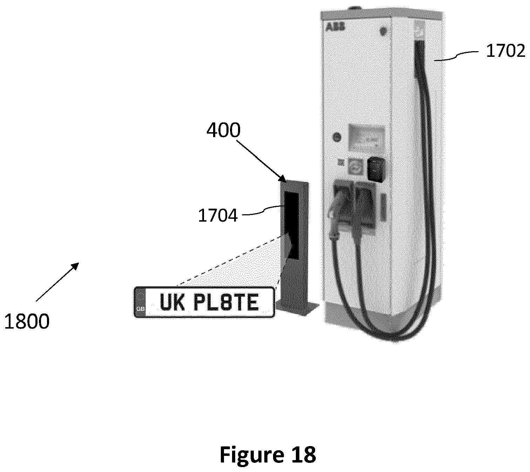

Figure 18 is a schematic of an apparatus 1800 where the bollard 400 with camera mount 202 (not shown) are separate from the EV charger 1702. In the present embodiment the EV charger is a DC charger.

The present embodiment allows for stand-alone post versions that could be deployed together with a separate larger charger (compared with Figure 17). These larger chargers may be high speed and are not suited for integrated cameras because, you have trailing cables (DC chargers are mandated to have attached cables, whereas the smaller AC chargers are not). They often do not have space and it is preferable to avoid including external fixings in case of damage to internal electrical components.

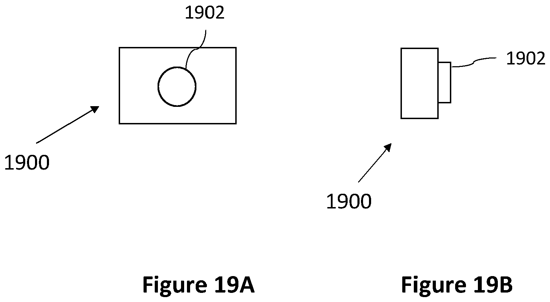

Figure 19A is a schematic showing a front view of an ANPR camera 1900 that may be used with any of the embodiments presented herein in accordance with the understanding of the skilled person. Figure 19B is a schematic showing a side view of the ANPR camera 1900.

The camera 1900 comprises a lens 1902 and may comprise a metal or plastic casing.

In use, the apparatus 1700, 1800 (or any other apparatuses disclosed herein and in accordance with the understanding of the skilled person may be used to monitor a car parking space. The apparatus 1700, 1800 may comprise a computer system to automatically detecting via the camera a plate number of the car.

It will be appreciated that the term "car" may be used herein but the systems of the present disclosure may be applied to any vehicle in accordance with the understanding of the skilled person.

The computer system may be used to interrogate a database of pre-stored number plates to retrieve one or more parameters associated with the number plate that is detected. This information may be used to determine whether the vehicle in the parking space is an electric vehicle, and therefore permitted to occupy the space.

Alternatively, or additionally, the computer system may monitor a time interval over which the vehicle is in the parking space and may take an action, such as generate a fine, if the parking space is occupied over a time limit.

In further embodiments, the computer system may be located remotely from the apparatus 1700, 1800.

In some embodiments, the mounting systems and bollards according to the present disclosure may comprise a processor coupled to the imaging sensor (previously described as the camera) and configured to execute various instructions for the purpose of monitoring or enforcement. It will be appreciated that the processor may be part of the mounting system and/or of the bollard; or, the processor may be embedded in a separate physical device which is configured to communicate with the imaging sensor. For example, the processor may be embedded within a nearby EV charger.

The mounting systems and bollards according to the present disclosure may further comprise appropriate memory for storing data and an electronic unit configured to enable the transmission of data between the imaging sensor, the processor and the memory. The processor may be configured to exchange information and instructions with a user device via the electronic unit. The processor may further be configured to exchange information and/or instruction with a remote central server. The remote server may be configured to gather and analyse data from multiple bollards which can be used for example for the purpose of car park management, enforcement, monitoring and/or to provide statistics and insights on user behaviour.

For example, the bollard may comprise an electric charger and gather data about the charging status of the battery of an EV parking in the monitored parking area. Users may be provided with a parking app executable on a computing device via which they can monitor the status of their EV battery when it is in the parking area, receive alerts when a pre-booked time slot is coming to an end, receive notices on an overstay, etc.

The processor may be configured to retrieve booking and/or payment details associated with a plate number and determine when a vehicle is overstaying their time, or to compute an amount chargeable to the user.

The mounting systems and bollards of the present disclosure may be deployed next to a barrier having automated means and the processor may be configured to control the automated means to open the barrier if a plate number detected by the imaging sensor meets certain criteria, e.g. if it can be established that it belongs to an EV for which a booking has been made.

The bollards of the present disclosure may comprise a payment device for allowing customer to pay for a parking service and/or charging service on the stop. For example, the bollards of the present disclosure may comprise an NFC reader for receiving payments by a user of the parking area and/or EV charger. The bollards of the present disclosure may also comprise a display configured to display a graphical user interface. The graphical user interface may be configured to enable a user to select payment options, a start charging command, an end charging command and so forth. The display may be a touch display.

The bollards of the present disclosure may comprise an input device through which a user may interact with the GUI and/or the processor. For example, the bollard may comprise a keypad or an acoustic sensors for automatic speech recognition.

In some embodiments, the bollards of the present disclosure comprise a processor and a display for showing a GUI as described above and the processor is configured to generate a QR code which is shown to the user on the display so that the user can provide instructions for starting, ending or paying a charging time simply by scanning the QR code with a smartphone or other portable user device. In some embodiments, scanning the QR code with a portable user device results in the user being prompted to open their parking app through which the user can execute various operations and/or provide the instructions as discussed above.

The embodiments of the present disclosure may facilitate the execution of various enforcement activities, such as detecting non-EV vehicles parked in EV charging bays or areas, EV returning before the end of a non-return period, EV vehicles occupying a parking area dedicated to charging without charging, charging beyond pre-booked times, etc.

The imaging sensor of the present disclosure is not limited to any specific type of sensor. For example, it may be a visible or infrared camera. However, in preferred embodiments, the imaging sensor is a sensor configured to perform automatic plate number recognition (APNR).

The apparatuses as disclosed herein may further comprise one or more of the following: an accelerometer to detect impacts; a thermometer to measure internal temperature; and proximity ultrasonic sensors, to detect vehicle arriving/leaving.

The imaging sensor may be a visible imaging sensor or it may be an infrared imaging sensor to enable capturing images in the dark.

In some embodiments, the imaging sensor is a visible imaging sensor and the bollard is provided with an infrared screen such that when the sensor is mounted on the bollard image capture is enabled also in the dark.

In some specific embodiments, the imaging sensor of the present disclosure is provided with a plastic casing and has minimum CPU power consumption.

It will be appreciated that different embodiments may use different means for attaching the camera mount of the present disclosure to the bollard so the present disclosure.

In some embodiments, the bollard of the present disclosure may comprise a plurality of first magnetic members, each member being provided at a different position on the mounting portion of the bollard. The camera mount may comprise a second magnetic member configured to be attracted by any of the first magnetic members and the apparatus may be configured such that the camera mount is held attached to the bollard at any one of the positions via the magnetic attraction between the first magnetic member the specific position and the second magnetic member.

In other embodiment the camera mount may be attached to the mounting portion of the bollard via a clamping member.

In yet other embodiments, the mounting portion of the bollard may comprise a track and a support member movable along the track. The camera mount may be configured to be attached to the support member such that when the camera mount is attached to the support member, the camera may be moved between the various positions on the bollard by moving the support member. The support member may comprise electric means and be remotely controlled.

The mounting system and bollards of the present disclosure allow a user to adjust the position of an imaging sensor for use within the car park for the purposes of enforcement, charger enablement, collision evidence and so forth.

In prior art systems, ANPR cameras are typically mounted on a bracket at the top of a pole and adjusted by changing the angle of the camera. However, the angle adjustment only allows to vary the field of view within a certain limit which may not be sufficient.

Additionally a "camera tilt action" would not fit in a bollard of a suitable size to make the size of the bollard comparable to other structures within a car park. The size of the bollard is important as it is desirable that the bollard can fit in a small area at the end of the bay or between bays.

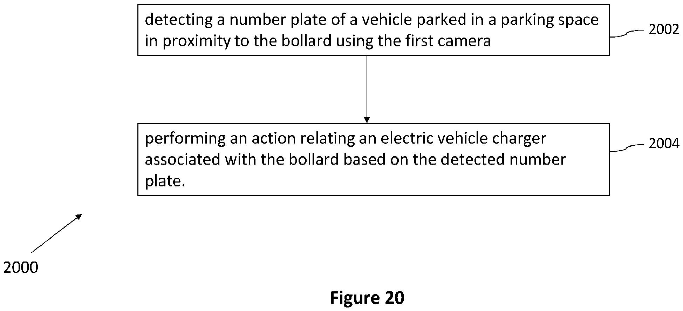

Figure 20 is a flow chart of a method 2000 of monitoring the use of an electric vehicle charger using any of the apparatuses disclosed herein, and in accordance with a ninth embodiment of the present disclosure.

The method 2000 comprises detecting a number plate of a vehicle parked in a parking space in proximity to the bollard using the first camera at a step 2002, and performing an action relating an electric vehicle charger associated with the bollard based on the detected number plate at a step 2004.

The mounting systems and bollards disclosed herein allow to adjust the position of an imaging sensor on site without having to uninstall or re-install or replace the bollard.

Furthermore, embodiments of the present disclosure permit multiple cameras to be enclosed within a single bollard thereby providing a compact design which is effective in saving area within a car park.

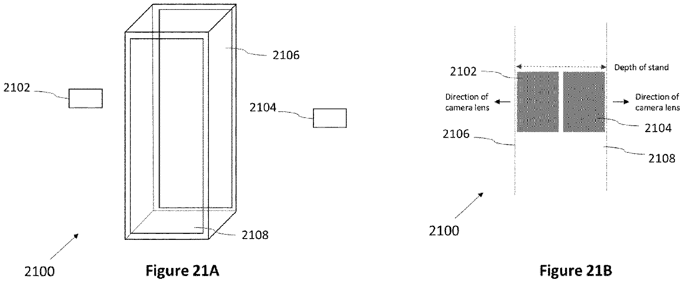

Figure 21A is a schematic of a bollard 2100 for holding a camera 2102 and a camera 2104 within its interior in accordance with a tenth embodiment of the present disclosure.

The bollard 2100 corresponds to the bollard 600 as illustrated in Figure 6A but in the present embodiment, the ability of the bollard 600 to hold the cameras 2102, 2104 in one or more positions is optional. It will be appreciated that the bollard 2100 may comprise any of the other features as described herein in accordance with he understanding of the skilled person.

The bollard 2100 comprises a mounting portion 2106 within the interior of the bollard 2100 and arranged to permit mounting of the camera 2102. The bollard 2100 further comprises a mounting portion 2108 within the interior of the bollard 2100 and arranged to permit mounting of the camera 2102. The mounting portions 2106, 2108 are arranged to permit mounting of the cameras 2102, 2104 in a back-to-back orientation.

Figure 21B is a schematic of the bollard 2100 with cameras 2102, 2104 mounted within.

It will be appreciated that in further embodiments, the bollard 2100 may be configured to permit mounting of more than two cameras within its interior.

It will be appreciated that in further embodiments cameras may not have their rear faces parallel with respect to each other, and their rear faces may be at angle, yet still referred to as "back-to-back". For example, 3 cameras back-to-back with respect to each other may have their rear faces at an angle of 60° with respect to adjacent cameras.

The present embodiment permits multiple cameras to be enclosed within a single bollard in an area efficient way thereby providing a compact design which is effective in saving area within a car park.

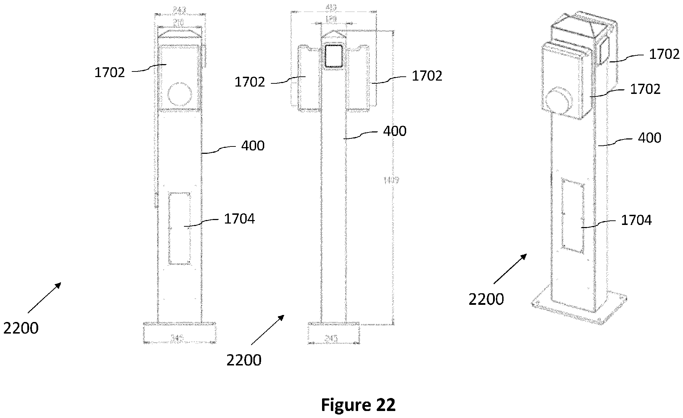

Figure 22 is a schematic of an apparatus 2200 corresponding to an alternative embodiment of the apparatus 1700 having two EV chargers 1702 and two cameras (not shown) in a back-to-back arrangement. Dimensions for a possible implementation of the apparatus 2200 are provided in the drawings. Dimensions are provided in millimetres.

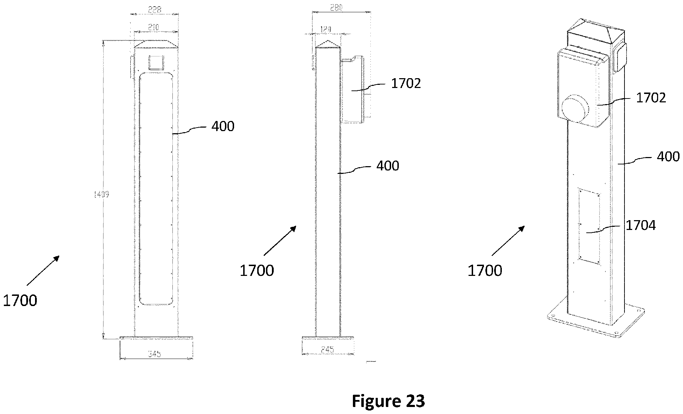

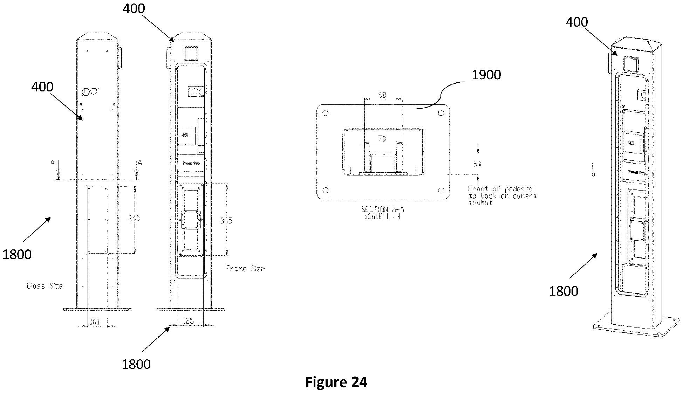

Figure 23 is an alternative schematic of the apparatus 1700 with possible dimensions shown. Figure 24 is an alternative schematic of the apparatus 1800 with possible dimensions shown.

It will be appreciated that in further embodiments of the apparatuses disclosed herein, more than two cameras may be implemented within a single bollard.

Embodiments of the invention show a bollard which is a substantially hollow casing and may, for example be constructed of tubular members, or connected panels which may be welded together or otherwise formed. The bollard may be made from metal, plastic, a combination of both or other suitable material which is sufficiently strong to allow the bollard to bear the mechanical loads it would ordinarily be subjected to when functioning as a bollard.

In examples of the present invention, one or more camera could be the same height, with no stacking.

Advantageously, the camera mount allows the camera lens to be very close to or against infra-red transmitting glass. This is important to maximise the amount of signal received by the camera. If the lens was at a sufficient distance from the glass, the IR light would reflect on the glass and back into the lens causing significant IR glare. This is made easy to achieve with the camera mount and the mounting portion in the bollard as described herein, especially when these components are flat or planar.

The bollard of the present invention may incorporate an EV charger. In these embodiments it is advantageous for the bollard to have a surface for the EV charger to be mounted on. An EV charger receives a significant amount of push and pull action, as cables are plugged in and out. To maximise this surface area, it has been found that a flat surface optimises the robustness of the device.

Various improvements and modifications may be made to the above without departing from the scope of the claims.

## Claims

1. A bollard (204) with a camera mount (200) for mounting a camera (202) within the bollard (204) at one of a plurality of positions (206); **characterised in that** the bollard (204) comprises a substantially hollow casing and the camera mount (200) is adapted to attach the camera (202) to an interior side of the hollow casing, the camera mount (200) comprising
a holder (302) for holding the camera (202); and
an attachment component (304), coupled to the holder (302) and arranged to permit attachment of the camera mount (200) to the interior side of the casing of the bollard (204);the bollard (204) further comprising: a first mounting portion (504) within the interior of the bollard (204) and arranged to permit mounting of the first camera (202) at one of the plurality of first positions (206); and wherein,
the attachment component (304) is couplable to the mounting portion (504) at one of a plurality of positions, thereby permitting mounting of the camera at one of the plurality of positions (206).

2. The bollard (204)of claim 1 comprising: a first window (502) arranged to permit light to enter the interior of the bollard (204).

3. The bollard (204) of any preceding claim comprising: a window (502) arranged to permit light including infra-red radiation to enter the interior of the bollard (204).

4. The bollard (204) of any preceding claim comprising: a second mounting portion (504) within the interior of the bollard (204) and arranged to permit mounting of a second camera (202) on a second camera mount (200) at one of a plurality of second positions (206).

5. The bollard (204) of claim 4 wherein, the mounting portions (504) are arranged to permit mounting of a first and second cameras (202) in a back-to-back or perpendicular orientation.

6. The bollard (204) of any preceding claim comprising: an electric vehicle charger (1702).

7. The bollard (204) of claim 3 wherein,
the attachment component (304) and the mounting portion (504) each comprise one or more apertures, and the attachment component is couplable to the mounting portion (504) at one of a plurality of positions by aligning at least one of the one or more apertures (506) of the attachment component (304) with at least one of the one or more apertures (306) of the first mounting component (504).

8. The bollard (204) of any of claims 2 to 7 wherein, the camera mount (200) is configured to permit mounting of the camera (202) in an orientation for receiving light entering the interior of the bollard (204) via the window (502) at a camera aperture of the camera (202).

9. The bollard (204) of claim 8, wherein the window (502) extends over a window area, with the camera mount (200) being configured to permit mounting of the camera (202) such that the aperture of the camera (202) extends over at least a portion of the window area.

10. The bollard (204) of any of claims 2 to 9, wherein the camera mount (200) and mounting portion (504) are configured to mount the camera (202) in proximity with the window (502) in order to maximize the amount of light directly received by the camera aperture and to minimize the amount of reflected light received by the camera (202).

11. The bollard (204) as claimed in any preceding claim wherein, at least one surface of the bollard is planar.

## Patentansprüche

1. Poller (204) mit einer Kamerahalterung (200) zum Montieren einer Kamera (202) innerhalb des Pollers (204) an einer von einer Vielzahl von Positionen (206); **dadurch gekennzeichnet, dass** der Poller (204) ein im Wesentlichen hohles Gehäuse umfasst und die Kamerahalterung (200) angepasst ist, um die Kamera (202) an einer Innenseite des hohlen Gehäuses anzubringen, die Kamerahalterung (200) umfassend
einen Halter (302) zum Halten der Kamera (202); und
eine Anbringungskomponente (304), die mit dem Halter (302) gekoppelt und angeordnet ist, um ein Anbringen der Kamerahalterung (200) an der Innenseite des Gehäuses des Pollers (204) zu ermöglichen; der Poller (204) ferner umfassend: einen ersten Halterungsabschnitt (504) im Inneren des Pollers (204) der angeordnet ist, um ein Montieren der ersten Kamera (202) an einer der Vielzahl von ersten Positionen (206) zu ermöglichen;
und wobei
die Anbringungskomponente (304) mit dem Halterungsabschnitt (504) an einer der Vielzahl von Positionen koppelbar ist, wodurch ein Montieren der Kamera an einer der Vielzahl von Positionen (206) ermöglicht wird.

2. Poller (204) nach Anspruch 1, umfassend: ein erstes Fenster (502), das angeordnet ist, um zu ermöglichen, dass Licht in das Innere des Pollers (204) gelangt.

3. Poller (204) nach einem der vorhergehenden Ansprüche, umfassend: ein Fenster (502), das angeordnet ist, um zu ermöglichen, dass Licht einschließlich Infrarotstrahlung in das Innere des Pollers (204) gelangt.

4. Der Poller (204) nach einem der vorhergehenden Ansprüche, umfassend: einen zweiten Halterungsabschnitt (504) im Inneren des Pollers (204) und der angeordnet ist, um ein Montieren einer zweiten Kamera (202) an einer zweiten Kamerahalterung (200) an einer von einer Vielzahl von zweiten Positionen (206) zu ermöglichen.

5. Poller (204) nach Anspruch 4, wobei die Halterungsabschnitte (504) angeordnet sind, um ein Montieren einer ersten und einer zweiten Kamera (202) in einer Rücken-an-Rücken- oder senkrechten Orientierung zu ermöglichen.

6. Poller (204) nach einem der vorhergehenden Ansprüche, umfassend: ein Elektrofahrzeugladegerät (1702).

7. Poller (204) nach Anspruch 3, wobei
die Anbringungskomponente (304) und der Halterungsabschnitt (504) jeweils eine oder mehrere Öffnungen umfassen, und die Anbringungskomponente an einer von einer Vielzahl von Positionen durch Ausrichten von mindestens einer der einen oder mehreren Öffnungen (506) der Anbringungskomponente (304) mit mindestens einer der einen oder mehreren Öffnungen (306) der ersten Halterungskomponente (504) mit dem Halterungsabschnitt (504) koppelbar ist.

8. Poller (204) nach einem der Ansprüche 2 bis 7, wobei die Kamerahalterung (200) konfiguriert ist, um ein Montieren der Kamera (202) in einer Orientierung zu ermöglichen, um Licht zu empfangen, das über das Fenster (502) an einer Kameraöffnung der Kamera (202) in das Innere des Pollers (204) gelangt.

9. Poller (204) nach Anspruch 8, wobei sich das Fenster (502) über einen Fensterbereich erstreckt, wobei die Kamerahalterung (200) konfiguriert ist, um ein Montieren der Kamera (202) zu ermöglichen, sodass sich die Öffnung der Kamera (202) über mindestens einen Abschnitt des Fensterbereichs erstreckt.

10. Poller (204) nach einem der Ansprüche 2 bis 9, wobei die Kamerahalterung (200) und der Halterungsabschnitt (504) konfiguriert sind, um die Kamera (202) in der Nähe des Fensters (502) zu montieren, um die Menge an Licht, das direkt von der Kameraöffnung empfangen wird, zu maximieren und die Menge an reflektiertem Licht, das von der Kamera (202) empfangen wird, zu minimieren.

11. Poller (204) wie in einem der vorhergehenden Ansprüche beansprucht, wobei mindestens eine Oberfläche des Pollers eben ist.

## Revendications

1. Bollard (204) doté d'un socle de caméra (200) destiné au montage d'une caméra (202) à l'intérieur du bollard (204) au niveau de l'une d'une pluralité de positions (206) ; **caractérisée en ce que** le bollard (204) comprend un boîtier sensiblement creux et le socle de caméra (200) est adapté à la fixation de la caméra (202) sur un côté interne du boîtier creux, le socle de caméra (200) comprenant
un support (302) destiné à supporter la caméra (202) ; et
un composant de fixation (304), couplé au support (302) et agencé pour permettre la fixation du socle de caméra (200) sur le côté interne du boîtier du bollard (204) ; le bollard (204) comprenant en outre : une première partie de montage (504) à l'intérieur du bollard (204) et agencée pour permettre le montage de la première caméra (202) au niveau de l'une de la pluralité de premières positions (206) ;
et,
ledit composant de fixation (304) pouvant être couplé à la partie de montage (504) au niveau de l'une d'une pluralité de positions, ce qui permet le montage de la caméra au niveau de l'une de la pluralité de positions (206).

2. Bollard (204) selon la revendication 1 comprenant : une première fenêtre (502) agencée pour permettre à la lumière de pénétrer à l'intérieur du bollard (204).

3. Bollard (204) selon l'une quelconque des revendications précédentes comprenant : une fenêtre (502) agencée pour permettre à la lumière comprenant un rayonnement infrarouge de pénétrer à l'intérieur du bollard (204).

4. Bollard (204) selon l'une quelconque des revendications précédentes comprenant : une seconde partie de montage (504) à l'intérieur du bollard (204) et agencée pour permettre le montage d'une seconde caméra (202) sur un second socle de caméra (200) au niveau de l'une d'une pluralité de secondes positions (206).

5. Bollard (204) selon la revendication 4, lesdites parties de montage (504) étant agencées pour permettre le montage d'une première et d'une seconde caméra (202) suivant une orientation dos à dos ou perpendiculaire.

6. Bollard (204) selon l'une quelconque des revendications précédentes comprenant : un chargeur de véhicule électrique (1702).

7. Bollard (204) selon la revendication 3,
ledit composant de fixation (304) et ladite partie de montage (504) comprenant chacun une ou plusieurs ouvertures, et ledit composant de fixation pouvant être couplé à la partie de montage (504) au niveau de l'une d'une pluralité de positions en alignant au moins l'une desdites une ou plusieurs ouvertures (506) du composant de fixation (304) avec au moins l'une desdites une ou plusieurs ouvertures (306) du premier composant de montage (504).

8. Bollard (204) selon l'une quelconque des revendications 2 à 7, ledit socle de caméra (200) étant conçu pour permettre le montage de la caméra (202) suivant une orientation pour recevoir la lumière pénétrant à l'intérieur du bollard (204) par l'intermédiaire de la fenêtre (502) au niveau d'une ouverture de caméra de la caméra (202).

9. Bollard (204) selon la revendication 8, ladite fenêtre (502) s'étendant sur une zone de fenêtre, le socle de caméra (200) étant conçu pour permettre le montage de la caméra (202) de sorte que l'ouverture de la caméra (202) s'étende sur au moins une partie de la zone de fenêtre.

10. Bollard (204) selon l'une quelconque des revendications 2 à 9, ledit socle de caméra (200) et ladite partie de montage (504) étant conçus pour monter la caméra (202) à proximité de la fenêtre (502) afin de maximiser la quantité de lumière directement reçue par l'ouverture de la caméra et de minimiser la quantité de lumière réfléchie reçue par la caméra (202).

11. Bollard (204) selon l'une quelconque des revendications précédentes, au moins une surface du bollard étant plane.
